(19) **Europäisches Patentamt / European Patent Office / Office européen des brevets**

(11) **EP 2 938 041 B1**

(12) **EUROPEAN PATENT SPECIFICATION**

(45) Date of publication and mention
of the grant of the patent:
**12.06.2019 Bulletin 2019/24**

(51) Int Cl.:
*H04L 29/06* (2006.01)   *H04L 12/58* (2006.01)
*H04L 29/08* (2006.01)

(21) Application number: **15165017.3**

(22) Date of filing: **24.04.2015**

(54) **METHOD AND SYSTEM FOR SELECTION IN MULTI-DEVICE SCENARIO**

**VERFAHREN UND SYSTEM ZUR AUSWAHL IN EINEM SZENARIO MIT MEHREREN VORRICHTUNGEN**

**PROCÉDÉ ET SYSTÈME DE SÉLECTION DANS UN SCÉNARIO MULTI-DISPOSITIFS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2014 ES 201430614**

(43) Date of publication of application:
**28.10.2015 Bulletin 2015/44**

(73) Proprietors:
• **Vodafone IP Licensing Limited
The Connection
Newbury
Berkshire RG14 2FN (GB)**
Designated Contracting States:
**AL AT BE BG CH CY CZ DE DK EE FI FR GB GR HR HU IE IS IT LI LT LU LV MC MK MT NL NO PL PT RO RS SE SI SK SM TR**
• **Vodafone España, S.A.U.
28108 Alcobendas (ES)**

(72) Inventors:
• **Martinez, Rogelio
London, Paddington Central W2 6BY (GB)**
• **Santos, Juan Miguel
London, Paddington Central W2 6BY (GB)**
• **Dominguez Gonzalez, Rafael
London, Paddington Central W2 6BY (GB)**

(74) Representative: **Boult Wade Tennant LLP
5th Floor, Salisbury Square House
8, Salisbury Square
London EC4Y 8AP (GB)**

(56) References cited:
**US-A1- 2008 281 971    US-A1- 2009 150 562
US-A1- 2013 208 658**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

Description

## TECHNICAL FIELD OF THE INVENTION

The present invention is comprised in the technical field of routing communication services in telecommunication networks. Particularly, in the field of management of requests for communications in an IP Multimedia Subsystem developed on a mobile telecommunications network.

The invention relates to the management of routing of an input communication of any type of service in a multi device scenario, wherein the devices have the same identity or different identity.

## BACKGROUND OF THE INVENTION

In multi-device scenarios in a telecommunication network environment, users have several user devices running multiple applications in each user device. This implies that the telecommunication network has to manage calls and also sessions for each application and for each user device. Due to the use of multiple applications in the user devices, these user devices can have the same identity or different identities for each application and/or user device. Therefore it is necessary to achieve a solution for management and control of all of these communication requests in an integrated way.

In the state of the art, multi-device scenarios are managed by leveraging network functionality i.e. the network only implements logic based on which user device or identity is connected. However, there is not a mechanism which gives the control to the service layer, where the user's information and services supported by the user are available to the logic.

Currently there are services (e.g. fonyou™) where the user can have two numbers in the same user device with only one SIM card. Also this service allows the user to deliver voice calls to several user devices of the same user, based on a configuration entered using a GUI (Graphical User Interface). However this only solves that the user can deliver services relating to voice calls and based on the phone number of each user device.

Other solutions handling these types of communication for several devices owned by the same user do not allow having the same user identity in several user devices.

US 8,504,708 B2 relates to a method and system for generic IP multimedia residential gateways. A common IP layer client device interface within an IP multimedia gateway (IMG) is configured to connect client devices to broadband IP networks such as the Internet based on determined device capabilities. Also the IMG is configured to enable communication between the IMG and broadband IP networks based on the determined device capabilities.

This document provides communication compatibility between devices with different users in a residential gateway. However it does not solve the problem of routing an input communication to a multiple devices with the same identity or with different identity, with different users in different types of telecommunication networks.

EP 2,489,210 A1 relates to a method for enabling delivery of a message between an IMS domain and a circuit switched (CS) domain. The method receives a message from a user device comprising an Equipment Identifier and an IMPI (IP Multimedia Private Identity) valid for the user, and stores the information in an application server. The method performs a mapping of said parameters of the IMS network to route the messages. This method works on solving the routing of voice and text messages, but does not solve the problem of routing voice, video and any data session that can be used with Session Initiation Protocol (SIP) to several devices using a common user identity, where user identity refers to a user registry storing personal configuration, which in the case of a telecommunication service would be the user account for said service. In this case messages are only routed to different devices according to their IMSI (International Mobile Subscriber Identity, i.e. the public user identity utilised by the typical IMS) registered in a server.

EP 1,886,458 B1 relates to a method and apparatus for identifying an IMS service to which a Session Initiation Protocol (SIP) message relates. One or more communication service identifiers, for example a contact header, are added to the SIP message as a feature tag, the feature tag being a communication service identifier identifying one of a plurality of communication services. This method uses said tags to route SIP transactions to a user device registered in IMS, but the method does not provide for compatibility with a circuit switched registered device and no field of the SIP transaction is used to decide the routing.

US 20130151665 A1 relates to media content flicking system and method. This patent application describes a method to transfer an already established media session to another user device, but it does not route the session to a user device or even an application before establishing the media session. It also does not route the communication to a circuit switched network.

EP 2,425,348 A1 relates to an information processing system and method providing a composed service. This patent describes a method to harmonize the capabilities of different devices located in different Local Area Networks (LANs), including protocol adaptation via a third party service. This method is based on the publication of each device and LAN capabilities. This method does not include any routing decision, as each user device has different user identity.

Therefore, the solutions of the state of the art do not manage a connection request to a determined user device or a set of user devices, for several types of traffic. It would desirable to find a method that increases the network functionality. Besides, none of the previous publications solves the problem of routing a request in a multi-device and multi-application scenario in a dynamic way leaving the charge of the decision to the IMS.

US 2009/0150562 describes an apparatus and associated method for directing communications of a communication session to a selected communication device. A device-direction policy is created and stored at a network entity. A SIP Invite, or other communication session invitation message is provided to the network entity, which then accesses the policy and forwards on the message accordingly.

US 2008/0281971 describes a method for multimedia communication between devices at a network. A request for a communication session may be received at a server, parameters for the session may be identified, and a device for receipt of the communication session may be identified based on the parameters.

Statement of the Invention

The present invention provides a solution for the aforementioned problem by providing a method of determining a user device for receiving a request for a communication service according to claim 1, an application server according to claim 9 and a computer readable medium, according to claim 10. The dependent claims define preferred embodiments of the invention. All the features described in this specification (including the claims, description and drawings) and/or all the steps of the described method can be combined in any suitable combination, with the exception of combinations of such mutually exclusive features and/or steps.

In particular, in a first aspect of the invention there is provided a method of determining which user device of a plurality of user devices should receive a Session Initiation Protocol, SIP, request for a communication service on a telecommunications system, the system comprising: a plurality of user devices adapted to run a communication service; an application server in communication with the plurality of user devices on which there is comprised a registry of the plurality of user devices, the registry comprising associations between user devices and SIP instances, each user device being associated with a respective user identity; and, a telecommunication network in communication with the plurality of user devices and with the application server, wherein the method comprises, at the application server: receiving a SIP request for establishing a communication service, the SIP request intended for a user identity from the telecommunication network; and, dynamically determining which SIP instance should receive the SIP request based on the user identity for which the SIP request is intended and parameters associated with the user device or SIP instance on the registry.

The request for a communication service is for example a phone call or an invitation for playing a multiplayer online game, and it can be sent to a mobile device capable for running applications for voice over IP or gaming applications. In an environment where multiple user devices in an IMS are capable of receiving such request for a communication and provided that the request is received as a Session Initiation Protocol (SIP) session and an application server takes account or comprises a registry of the plurality of user devices, there is a possibility of determining a user device for receiving the communication, by implementing the steps of receiving and determining.

The main difference with respect to the state of the art, and thus the main advantage, is that any type of SIP service, such as calls, text messages, video, games, rich communications services enhanced RCS-e or any other multimedia session can be established and routed dynamically to a user device by basing the decision on non-standard parameters such as capabilities of the user device acting as receiver and boundary conditions such as user's preferences. In the present description, the term dynamic is to be understood as changeable or adaptable to different situations or requirements.

The present invention introduces a degree of control and flexibility to communications. A user is able to have the same features in several devices. Conventionally, all multi-device scenarios are performed by leveraging network functionality. The present invention is operable to implement specifically designed logic based on external factors independent of network functionality.

In an embodiment of the method for determining a user device for receiving a request according to the invention, the step of determining further comprises determining which SIP instance should receive the SIP request (RQ) based on a static parameter associated to a user device (UD) or a group of user devices (UDs). The static parameter may be configurable per application or per user identity.

In a case where an action is to be performed independently of the context of the situation, a static decision is taken which cancels or overrules any dynamic decision. This advantageously allows deciding the destination of the request depending on fixed rules.

In an embodiment of the method for determining a user device for receiving a request according to the invention, the parameters associated with the user device or SIP instance on the registry include one or more selected from a group comprising: capabilities of the user device (UD) associated to each SIP instance on the registry; current user device communication bearer technology; contextual information; and stored user preferences.

These parameters advantageously can be chosen depending on the requirements of the system in which the method is implemented and therefore allows versatility in terms of adaptation to different scenarios.

The method may further comprise routing the request (RQ) for a communication service to the determined user device (UD) or determined user devices (UDs).

This method advantageously allows routing the session to the determined user device acting as a receiver and, based on a response, proceeding further with the establishment of the dialog, redirecting the session to another instance, or doing nothing. This method allows delivering not only voice calls but also any session such as, chat, file transfer, video share, and voice over IP (VoIP) calls. Further, these voice calls and sessions can be delivered not only based on the numbers of the different user devices but also based on the capabilities of each user device acting a potential receivers, i.e. what type of session or application they can receive, so the freedom in the decision of the receiving user device is higher than in the state of the art. It is therefore possible to decide where to handle a session depending on the capability, i.e. chats are to be sent to a particular device and calls towards another device, or file transfer towards a different one.

In a scenario like the one stated above it is possible for the SIP request to reach a particular user device associated to the SIP instance which the request is intended for. Further, based on a response from said SIP instances, it is possible to proceed with the initiation of a dialogue for a call, or game, or otherwise redirect the request to another SIP instance associated with such communication service in case of no availability, for example an online game, to another user device capable for running it.

In an example, the method identifies the devices and identifies and which of them are online. Upon one incoming call or session the method enables the application server to decide which user device or SIP instance to establish the communication with, having into account the capabilities of all of them. This method allows a user to have several user devices and applications with several identities, or several user devices and applications with the same identity, or a combination of both.

Conceptually, the method may be performed in two stages. The first step can be named registering and the second can be named determining.

As for the first stage "registering", the application server becomes aware of the registers of the different identities and applications of the same user. This mechanism is performed by using the user device registration in an Application Server, which is part of the state of the art, as part of an IP multimedia subsystem (IMS). The relevant information about the registration, or SIP register message, may be sent to the application server via a third party or may be loaded on the application server periodically, as a way of updating the register.

As for the second step of "determining", it allows the application server to be aware of the incoming calls or communication services, such as requests for video conferences to a user and then, based on the capabilities of each user device, the registered identities for the user and the user's associated SIP instances, the application server may establish the communication by routing the call or gaming session to the determined user device which will be associated to a SIP instance within the application server.

The step of routing may comprise sending the request:

- to the determined Session Initiation Protocol (SIP) instance, or
- to the user device associated to said instance, or
- to the several determined Session Initiation Protocol instances, or the user devices associated therein, if there are several Session Initiation Protocol instances, or
- to the user identity or user identities attached to a circuit switched network, or
- to none of them, in case that no instance is capable for running the service for which the request is intended.

In this case it can be assumed that each SIP instance may be associated to more than one user device, in such manner that if a request is intended for one particular SIP instance and the application server routes the request to a user device, in case of no availability the user device sends a rejection response and the application server can redirect or route the request to another user device associated to the same SIP instance. In this scenario, the application server comprises an association between SIP instances and more than one user device. Advantageously, the routing is dynamic in the sense of searching alternatives when a communication is not possible to a determined SIP instance. This represents a difference with respect to the state of the art as routing politics are fixed when a SIP session is to be started.

The routing may be performed according to different cases where:

- the request is sent to the Session Initiation Protocol instances associated to user devices which are voice over IP capable if the request is a voice over IP call, or
- the request is sent to the Session Initiation Protocol instance for a user identity attached to a circuit switched network if the request is a voice over IP call and there are no user devices voice over IP capable available.

Advantageously this allows versatility in terms of redirecting a call, through a gateway, towards a circuit switched network. In this case, in the application server a SIP instance is associated to both user devices VoIP capable and user devices which are not capable for VoIP.

The routing may be performed towards all the user devices with Session Initiation Protocol (SIP) capabilities if a request based on Session Initiation Protocol (SIP) other than VoIP is received.

In this case, advantageously a broadcast request is sent so that the decision may be based, for example, on the first device responding to the request.

The step of receiving a response comprises receiving a response from one of the Session Initiation Protocol (SIP) instances or attached circuit switched device. Advantageously, the method allows receiving responses not only from one scenario in the communication standards, such as the packet switched but also from circuit switched by using, for example, a gateway and the suitable logic at the application server.

The communication service may be a voice call and the step of receiving a response comprises:

- receiving a partial response, preferably one of the type comprising 18X format response, based on which a decision is made by the application server, or
- receiving a final response, preferably one of the type comprising 2XX, or 3XX, 4XX or 5XX format response, based on which a decision is made by the application server.

Advantageously this allows having a complete integration with the SIP protocol so that when, for example, a final response is received indicating that the receiving SIP instance is occupied, the logic at the application server is adapted to redirect a call to another SIP instance.

If during a Session Initiation Protocol SIP request the application server receives a 302 SIP message from the SIP instance which has received the request, then the application server may redirect said request to a circuit switched. This embodiment allows integration with the circuit switched technology in such a way that a call is redirected through a gateway in case of no availability by a SIP instance capable for running a VoIP call.

In an embodiment, the method comprises terminating the establishment of the communication. From this point onwards the SIP session either continues by exchanging data between the requester and the receiver or the dialog terminates.

In an embodiment, the method comprises sending a broadcast message to all registered user devices associated with a particular user identity and routing the SIP request to a device which responds to the broadcast message. Advantageously, this capability can be used as a way of default action, where no requirement is needed as for capabilities in the receiving device; this would be an advantage in cases when it is more important to receive the request rather than to receive it at best quality.

In an embodiment, the method comprises determining which SIP instance should receive the SIP request (RQ) based on a static parameter, the static parameter including one or more parameters selected from a group comprising: time of day, date, broadcasting in all cases, configured default routing and type user identity associated with a user device. Advantageously this provides selecting a type of routing by default or depending on environmental conditions.

The method differs from the state of the art in that it allows having a multi-device scenario and improves network efficiency. The method in turn moves control towards the service layer, which comprises the user information and services supported by user devices associated to SIP instances in the registry, in a multi-device scenario where different services are provided.

Advantageously an application server on a telecommunication network according to the invention can be configured to perform the method for determining a user device for receiving a request for a communication service. Additionally the server can implement other methods to route the received request for a communication service and to receive the response originated from said routing. A suitably configured computer readable medium may also be provided.

In a further aspect of the invention there may be provided an application server comprised on a telecommunication network, the server being adapted to perform the steps of a method according to the first aspect of the invention.

In a further aspect of the invention there may be provided an application for determining a user device for receiving a Session Initiation Protocol SIP request for a communication service on a telecommunications system comprising, the application comprising:

- means for receiving a Session Initiation Protocol SIP request, by an application server, for establishing a communication service intended for a user identity from a telecommunication network; and,
- means for determining, by the application server, which Session Initiation Protocol instance should receive the SIP request, said determination being based on a dynamic decision, said dynamic decision being preferably based on parameters regarding capabilities of a user device associated to a SIP instance on the registry.

DESCRIPTION OF THE DRAWINGS

These and other characteristics and advantages of the invention will become clearly understood in view of the detailed description of the invention which becomes apparent from preferred embodiments of the invention, given just as an example and not being limited thereto, with reference to the drawings.

| | |
|---|---|
| Figure 1 | This figure represents an embodiment of the architecture of a telecommunication network where a method according to the invention is implemented. |
| Figure 2 | This figure represents an embodiment of a system implementing a method where there is a requesting user device (26) which sends the request (21) to establish a game session with a user for which a registered user identity exists in the Application Server (AS) comprising two user devices (27, 28), first user device (27) running in an xDSL/LAN/WiFi environment, and second user device (28) in a 2G coverage network environment. |
| Figure 3 | This figure represents an embodiment of a system implementing a method according to the invention. There is a requesting user device (38) sending a voice over IP (VoIP) call to a user having two user devices associated with SIP instances in the register: a first user device (310) in a 2G coverage network environment and a second user device (39) working under WiFi coverage and capable for running a VoIP call. |
| Figure 4 | This figure represents an embodiment of the method wherein there is a requesting user device (44) sending a request for a Rich Communication Services enhanced (RSC-e) session call with a user identity wherein all the user devices associated to the SIP instances are offline. |
| Figure 5 | This figure represents a flow diagram of an embodiment of the method. The flow diagram represents the case of receiving (51) a request (RQ), determining (52) and routing (53) depending of the type of request (RQ) received and the environment of the telecommunication network (TN). |
| Figure 6 | This figure represents a flow diagram explaining an embodiment of the method, which comprises the following steps: receiving (61) by the application server (AS) a request (RQ) for a SIP service, checking (62) if there are multimedia devices available. If there are no multimedia devices available, the application server (AS) redirects (63) to circuit switched (CS), and depending of the received request, determining (64) the routing. |

## DETAILED DESCRIPTION OF THE INVENTION

Once the object of the invention has been outlined, specific non-limitative embodiments are described hereinafter.

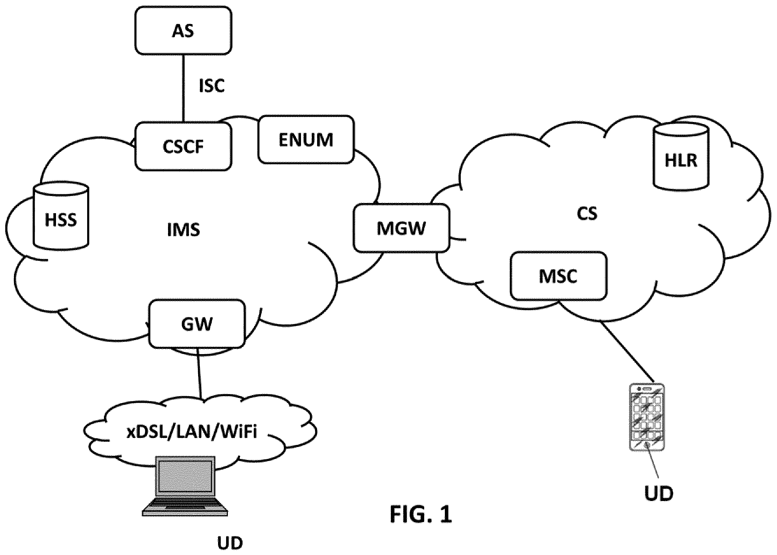

As a way of an example, there is shown, in figure 1, the architecture of a telecommunication network where a method according to the invention is implemented. Elements according to the invention are shown in figure 1:

- AS: application server in charge of all the determining steps, whereon the method is running. The application server comprises a register with SIP identities associated to different user identities; in turn, the user identities are associated with users.
- UD: User devices,
- IMS: IP Multimedia Subsystem network.

Furthermore the telecommunication network of figure 1 comprises:

- ISC: IP multimedia Service Control is the interface between the Application Server (AS) and the Call Session Control Function (CSCF).
- GW: Gateway allowing the connection between different networks.
- MGW: Media gateway is a translation device or service that converts digital media streams between disparate telecommunications networks such as public switched telephone network (PSTN), Signalling System No. 7 (SS7), Next Generation Networks (2G, 2.5G and 3G radio access networks) or private branch exchange (PBX).
- MSC: Mobile Switching Centre is the primary service delivery node for Global System for Mobile communications/ Code Division Multiple Access (GSM/CDMA), responsible for routing voice calls and Short Message Service (SMS) as well as other services (such as conference calls, Fax and circuit switched (CS) data).
- HLR: Home Location Register is a central database comprising details of each mobile phone subscriber that is authorized to use the GSM core network.
- HSS: Home Subscriber Server is a master user database supporting the IP Multimedia Subsystem (IMS) network entities and handling calls. It comprises the subscription-related information (subscriber profiles), performs authentication and authorization of the user, and can provide information about the subscriber's location and IP information.
- CSCF: Call Session Control Function is used to process SIP signalling packets in the IP Multimedia Subsystem (IMS).

- ENUM: Electronic Number Mapping System permits connecting the devices using IP standard to the traditional telephone system.

In one embodiment, a method according to the invention is implemented so that the user devices (UD) on the system are registered in an Application Server (AS) by identifying sip-instance information.

In one embodiment, a method according to the invention is implemented so that the registration of the user devices (UD) works as follows:

The functionality to know which instance is registered may be performed implementing a third party registration against a Session Terminating Function node in the Application Server (AS) with the following relevant information:

- SIP instance tag in the Contact Header field indicating the device or stack used. The contact field contains the address at which the callee can reach the caller for future requests. For example, it's necessary so that the callee can send a BYE or a re-INVITE to the caller
- Capabilities in the Accept Contact Header indicating what capabilities are needed to be supported by the called instance. The Accept Contact Header allows the caller to provide a feature set that expresses its preferences on the characteristics of the device that is to be reached. It is matched with a feature set provided by a device to its registrar.

The application server (AS) should store the status of the instance of the user, and the capability supported, in order to use this information for logic execution. The application server (AS) should reject those registrations coming from a user device indicating a capability not allowed, i.e. if a user device tries to register with an instance indicating VoIP and the user device is not allowed VoIP, the method should reject the registration.

In an embodiment of a method according to the invention, the following behaviours may be implemented, when receiving a communications service request (RQ) from a requesting user device (UD):

- Upon receiving an incoming call request (RQ), either circuit switched CS call or voice over IP (VoIP) call, the application server (AS) broadcasts the call to all the user devices (UDs) registered with VoIP capabilities. If there is no VoIP user devices (UDs) registered, the method routes the call to CS; or
- In the case of that the incoming call request (RQ) is a VoIP call request (RQ), the application server (AS) sends the call to the VoIP user devices registered. In the case that there is more than one user devices VoIP capable, and the application server receives positive responses from more than one of them, a method according to the invention handles the multiple responses using the following considerations:

  - If the application server receives an answer from any user device (UD), an answer is sent to the requesting user device (UD); or
  - If the application server receives a busy from any user device (UD), a busy indication is sent to the requesting user device (UD); or
  - If the application server receives a not registered from all the user devices (UDs), a not registered device message is sent to the requesting user device (UD); or
  - If the application server receives no instance response, a cancellation signal is sent to the requesting user device (UD);

- In the case of during a call established with a VoIP client the application server receives a 302 message indicating redirection to CS, the method sends the call to CS.
- In the case of receiving a RCS-e session request (RQ), the application server sends the request (RQ) to all the user devices (UDs) with RCS-e capabilities. In this case, when more than one response is received from more than one SIP instances, the same considerations may be taken for several response than in the previous case;
- In the case of receiving a gaming session request (RQ), the application server sends the request (RQ) to the user device (UD) with such capability. The typical situation is that only one user device (UD) has such capability for one user with several user identities, where user identity, refers to a user registry entry, the registry storing personal configuration, which in the case of a telecommunication service would be the user account for said service for example a user account for a voice over IP service, or for a gaming service.

The following examples may be obtained from the previous embodiment; namely roaming check, call terminating function for voice and RCS-E sessions, call terminating function for a user with voice either in CS domain or IMS domain (VoIP client), handling options in multi-device scenarios, multistack handling for gaming and handling multi-device scenarios

*-Roaming check*

This example shows an embodiment according to the step b) of dynamic determination of the invention, wherein the application server (AS) may identify whether the user device (UD) is in roaming comprising the following aspect:

- If the header "X-roaming" is included in the incoming request (RQ) and if the value is "MSISDN+roaming" then the user device (UD) is in roaming. If the value is "MSISDN+noroaming" then the user will not be in roaming.
- If there is not "X-roaming" header included, or the MSISDN included in the "X-header" in not matching with the destination, then, the application sever may check if the user is in roaming or not.

If the user is in roaming, the application server (AS) may check if the user account is post-paid or pre-paid in order to put the correct prefix to send the call to pre-paid system or post-paid roaming system and apply the correspondent charge in the user's bill.

*-Call Terminating Function for Voice and RCS-e sessions*

This example shows an embodiment according to the step b) of dynamic determination of the invention, wherein the application server (AS) may identify if the incoming call is a CS voice call or a RCS-e session. This identification is achieved by checking the incoming field in the SIP request (RQ), the field known as Accept Contact header field. Inside the Accept Contact Header field, the application server (AS) may identify that the tag included is the one corresponding to a RCS-e session.

To perform the step c) of routing to an international telecommunication network (TN), the application server (AS) may add a prefix to the incoming Request_URI. For example the prefix may be +34000000001 if the destination is a Spanish user number or +340000000002 if the destination is an international user number.

*-Call Terminating Function for a user with voice either in CS domain or IMS domain (VoIP client)*

This example shows an embodiment according to the step b) of dynamic determination of the invention, wherein the application server (AS) may identify if the incoming call is a CS voice call or a VoIP call. This identification is achieved by checking the parameter in the request (RQ): Accept Contact header. Inside the Accept Contact Header, the application server (AS) may identify that the tag included is the one corresponding to a VoIP call.

To perform the step c) of routing to a CS telecommunication network (TN), the application server (AS) may add a prefix to the incoming Request_URI. For example, this prefix is +340000000001. If the call is a VoIP call, the application server (AS) may check if the destination is under 2G coverage or not. This information is gathered from the Registration of the corresponding instance. There is a header indicating this information.

If the call is answered by one of the VoIP clients, the application server (AS) may add a "smart call" call header to identify that the call has been answered by a VoIP client.

*-Handling Options in Multi-device Scenarios*

This example shows an embodiment wherein the step of routing c) (23, 33, 35, 53, 613, 616) comprises sending the request (RQ). In this case, the application server (AS) may receive an Option message; the application server (AS) may identify the instances from the ones registered by the user and send the option to each.

Only the 200 OK messages responses are considered and application server (AS) may wait until all the instances registered have answered. The application server (AS) may send back only one 200 OK with the merge of all the capabilities.

*-Multistack Handling for Gaming*

This example shows an embodiment wherein the step of routing c) (23, 33, 35, 53, 613, 616) comprises sending the request (RQ). In this case, the application server (AS) may identify if the incoming call is a Gaming session. This identification may be achieved by checking the availability of the Accept Contact header and the availability of the gaming tag on it. In case no instance registered with this capability, a 480 message is sent to the originating. The only information to store is the statistic generated for each session established or attempted to establish.

*-Handling Multi-device scenarios*

This example shows an embodiment wherein the step of routing c) (23, 33, 35, 53, 613, 616) comprises sending the request (RQ) to the instances supporting a predetermined capability and the application server (AS) may handle the responses from the different instances.

Examples of answer considerations are:

- answer: 200 OK messages,
- busy: 486 busy messages and
- not registered user: 480 message; this message may be identified by checking the instances registered by the user identity.

In the case of an incoming call, the application server (AS) may consider that there are already existing services handling multi-device services. The application server (AS) may receive a new header indicating that the call is targeted to some specific devices and depending on that, the application server (AS) may send the call to CS domain or to the corresponding instance registered in the IMS domain.

In another embodiment a voice over IP service (VoIPSRV) is configured on the application server (AS) to route voice calls to user devices via regular CS and the different SIP instances that the user has registered on the application server. The user devices associated to the SIP instances also have Joyn™ and VCOM™ capabilities, which are IMS services that are not intended to handle this kind of voice calls. In this embodiment the user has registered different SIP instances:

$$MSISDN \text{ for } VCOM.SIP\_instance1 = MSISDN + GRRU(VCOM)$$

$$MSISDN \text{ for } Joyn.SIP\_instance2 = MSISDN + GRUU(JOYN)$$

$$VoIP\text{-}PC\ client.SIP\_instance3 = MSISDN + GRUU(VoIP)$$

In this case, the common user identity is the same for the three cases (the user identity is the IMPU as defined in the RFC 3261). What is different is the SIP-instance or GRUU. In most of the cases, the IMPU is the MSISDN itself, which is the primary identity or primary key in most of the telecommunications services.

A VoIP call request reaches the AS directed to this user. The AS determines that the request is for the service VoIPSRV, so the request is forwarded to the VoIP-PC client and the CS identity, while the other clients never receive this request.

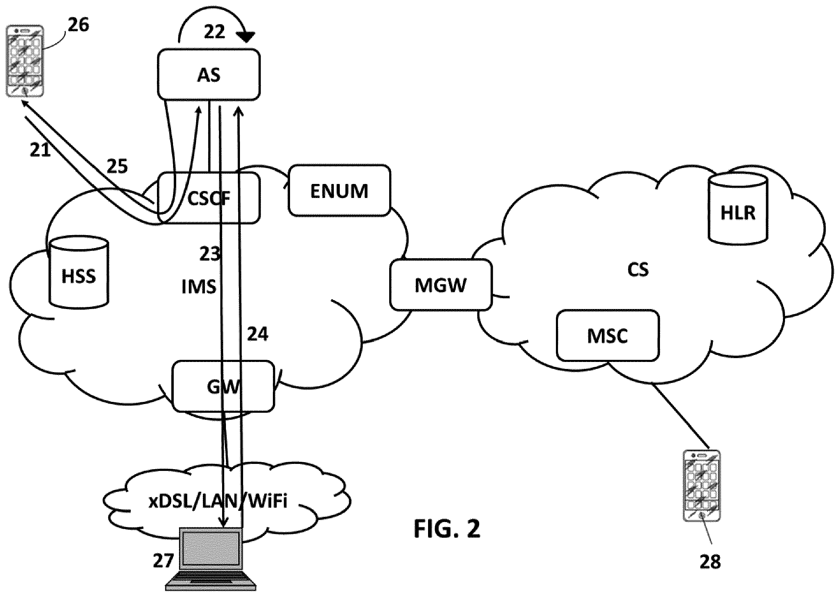

In figure 2 an embodiment of a system implementing a method according to the invention is shown, having the same architecture described for figure 1. There is shown a requesting user device (26) which sends the request (21) for establishing a game session with a user for which a registered user identity exists in the Application Server (AS) comprising two user devices (27, 28), first user device (27) running in an xDSL/LAN/WiFi environment, and second user device (28) in a 2G coverage network environment.

The application server (AS) receives the request (21), from the user device (26). The application server (AS) determines (22) which user device (27, 28) associated to the user identity should send the request (21) to according to the type request (21). In this embodiment, since the second user device (28) is in 2G coverage network environment, the gaming request (21) is routed (23) to the first user device (27) because it is the only user device (47) that can receive the game session request (21).

After the first user device (27) accepts the request, the application server (AS) receives (24) a Session Initiation Protocol (SIP) final response 2XX (Successful Response), for example a 200 message (indicating the request was successful). Finally, the application server (AS) sends the response (25) to the requesting user device (26) and the establishment of the communication is terminated. The requesting user device (26) starts the gaming session with the first user device (27).

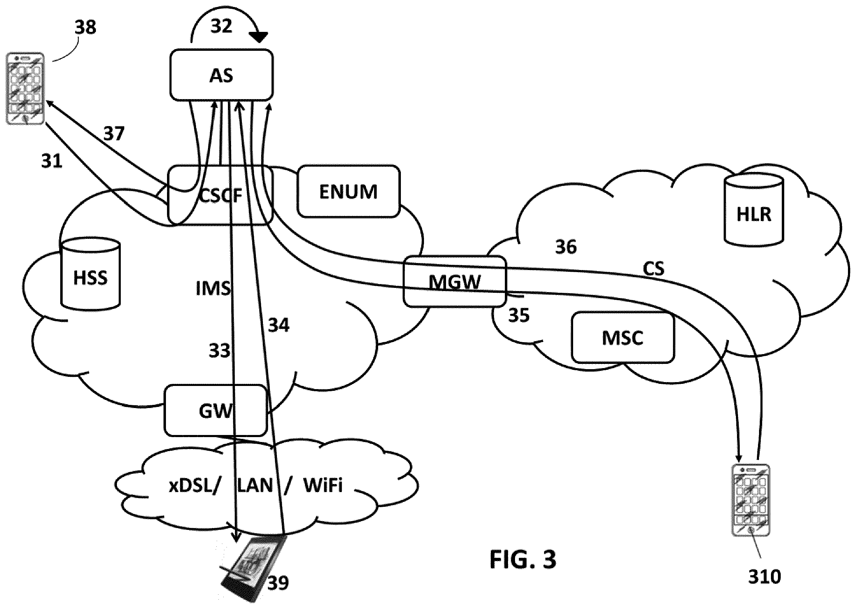

In figure 3, an embodiment of a system implementing a method according to the invention is shown. There is a requesting user device (38) sending a voice over IP (VoIP) call to a user having two user devices associated with SIP instances in the register: a first user device (310) in a 2G coverage network environment and a second user device (39) working under WiFi coverage and capable for running a VoIP call.

The application server (AS) receives the request (31), from the requesting user device (38). The application server (AS) determines (32) the user device (UD) to which the VoIP call request should be sent to. The best option is, according to the register, sending (33) the request (31) to the second user device, as it is VoIP capable. In this embodiment, since the second user device (39) is in 2G coverage and the application server (AS) receives (34) a busy from the second user device (39).

The user, in this embodiment, has a predetermined configured option for which, if a request (31) no matter what type, is received from the requesting user device of the example (38) all the user identities associated to the user need to be checked. Therefore, the application server, at receiving (34) the busy signal from second user device (39) redirects (35) the call towards CS where first user device (310) is available for responding. Then, a positive response 200 is sent (36) back towards the application server (AS).

Finally, the application server (AS) responds (37) with an invitation to the requesting user device (38) to connect to circuit switched.

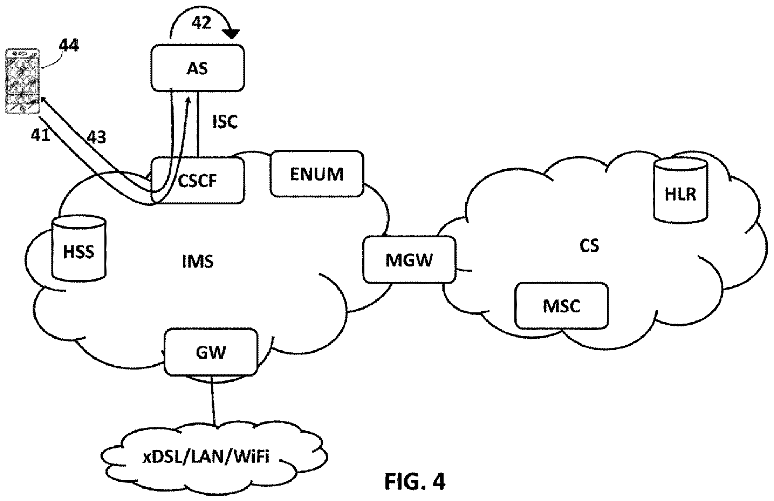

In figure 4, an embodiment of the method is shown where there is a requesting user device (44) sending a request for a Rich Communication Services enhanced (RSC-e) session call with a user identity whom which all the user devices associated to the SIP instances are offline.

The application server (AS) receives (41) the request, from the requesting user device (44). The application server (AS) determines (42) to which user device (UD) associated to the user identifier the request (41) should be sent to according to the type of request (41). In this embodiment, all the user devices (UDs) are offline, and the application server (AS) sends (43) a Session Initiation Protocol final message 4XX (Client Failure Responses), for example, a 480 message (receiver currently unavailable).

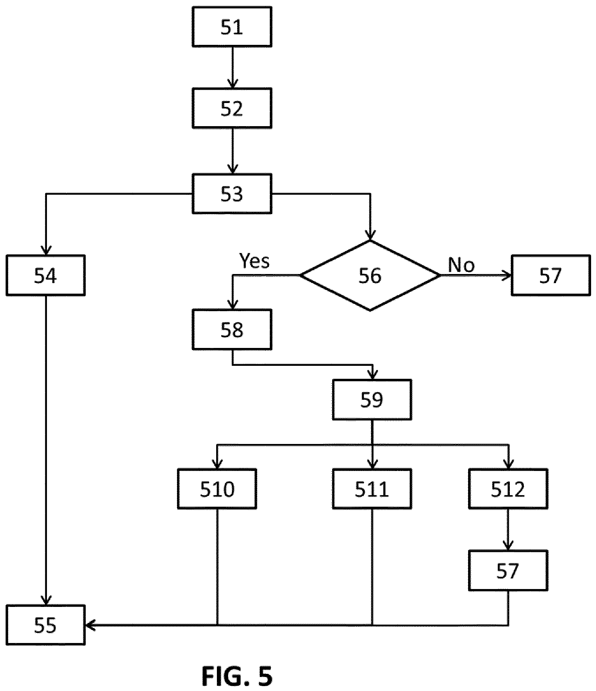

In figure 5 a flow diagram is represented showing the steps of a method according to the invention comprising:

- receiving (51) a request (RQ) in the application server (AS).
- determining (52) which user device can receive the request (RQ), depending of the case the method proceed as follows:

*Case 1: routing (53) a request (RQ) directed to user devices (UD) which are not capable of, or available for, receiving it*

In this case, the application server (AS) does not find any user device (UD) online associated to the user identity, or the request (RQ) is not in the application's list associated to the user identity. In this case, the method rejects (54) the request (51) and the method finishes (55).

*Case 2: routing (53) a voice over IP (VoIP) request*

In this case, the request (51) is a voice over IP (VoIP) request (RQ). The application server (AS) checks (56) whether there is at least one user device capable of accepting a voice over IP (VoIP) request (RQ) associated to the user identity. In this case, the application server (AS) redirects (57) the communication in the circuit switched (CS) network.

When there is at least one user device (UD) capable of accepting a voice over IP (VoIP) request (RQ) associated to the user identity, the application server (AS) sends (58) the request (RQ) to a compatible user device (UD) associated with said user identity.

Subsequently the application server receives (59) a response from the at least one user device (UD) associated to the user identity and depending of the type of response:

- receiving a final (510) response,
- or receiving a partial (511) response,

the application server (AS) either

- ends the method (55), or
- if the application server (AS) receives a 302 SIP message (512) (moved temporarily), the application server (AS) redirects (57) the connection to circuit switched (CS), and the method terminates (55).

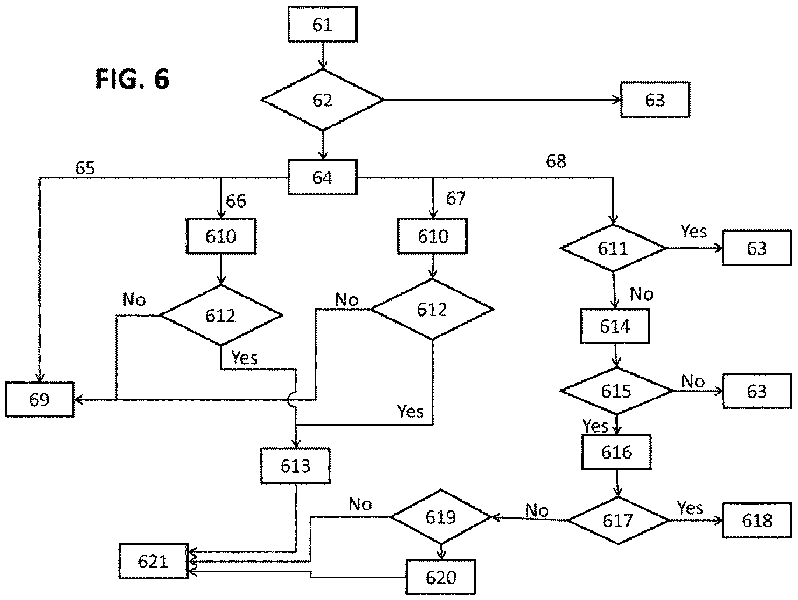

In figure 6, a flow diagram is shown representing an embodiment of the method, which comprises the following steps:

i. receiving (61) by the application server (AS) a request (RQ) for a SIP service;
ii. checking (62) if there are multimedia devices available,iIf there are no multimedia devices available, the application server (AS) redirects (63) to circuit switched (CS); and,
iii. determining (64) which type of communication service is requested. Depending on the received request the method proceeds as follows:

*Case 1 (65): There are no user devices (UD) registered which are capable of running said communication service or application*

In this case, the application comprised in the request (RQ) is not in the set of registered applications that the user identity has registered in the Application Server (AS). In this case, the Application Server (AS) sends (69) a Session Initiation Protocol final response 4XX (Client Failures Responses), for example, a 480 message (receiver currently unavailable).

*Case 2 (66): The communication service requested is a Rich Communication Services enhanced (RCS-e) session*

In this case, the communication service that is intended for the user is a Rich Communication Services enhanced (RSC-e) session. In this case, the application server (AS) checks (610) if there is a multi-device scenario. After that, the application server (AS) checks (612) if there is any user device (UD) registered, when there is not any user device (UD) registered, the application server (AS) responds (69) with a Session Initiation Protocol final response 4XX (Client Failure Responses) to the requesting user device, for example, a 480 message (receiver currently unavailable).

When there is at least one user registered in the application server, the application server (AS) sends (613) a broadcast invitation, and continues terminating (621) the establishment of the communication and therefore proceeding with a normal dialogue between requesting user device and receiver user device.

*Case 3 (67): The communication service requested is a gaming session*

In this case, the communication service that is intended for the user is a gaming session. In this case the application server (AS) checks (610) if there is a multi-device situation. After that, the application server (AS) checks (612) if there is any user device (UD) registered; if there is not any user device (UD) registered the application server (AS) responds (69) with a Session Initiation Protocol final response 4XX (Client Failure Responses), for example, a 480 message (receiver currently unavailable).

If there is at least one user capable for gaming registered in the application server, the application server (AS) broadcasts or routes (613) an invitation to all user available devices, and it continues terminating (621) the establishment of the communication and therefore proceeding with a normal dialogue between requesting user device and receiver user device.

*Case 4 (68): The application requested is a voice over IP (VoIP) session*

In this case, the communication service that is intended for the user is a voice over IP (VoIP) session. In this case, the application server checks (611) whether the user devices available work only under 2G coverage, in which case, the application server (AS) redirects (63) to circuit switched (CS).

When the user devices work under in 3G, 4G or Wifi environment, the application server (AS) checks (614) whether there is a multi-device situation. Subsequently the application server (AS) checks (615) whether there is any user device (UD) capable for VoIP registered. If there is no voice over IP (VoIP) user device (UD) registered, the application server (AS) redirects (63) to circuit switched (CS).

In the case that there is at least one user device (UD) capable for VoIP registered in the application server, the application server (AS) broadcasts or routes (616) the request (RQ) to all of them, and receives (617) a response. Is the application server (AS) receives a Session Initiation Protocol final response 3XX (redirection responses) from at least one user device (UD), for example a 302 message (moved temporarily), in this case the application server (AS) redirects (618) the connection to circuit switched.

When the application server (AS) receives (619) a Session Initiation Protocol final response 2XX (Successful Response), for example a 200 message (indicates the request was successful), then the application server (AS) adds the header "smart call" (320) and continues terminating (621) the establishment of the communication and therefore proceeding with a normal dialogue between requesting user device and receiver user device.

In the case that the application server has not received a Session Initiation Protocol final response 2XX (Successful Response), the application server (AS) continues terminating (621) the establishment of the communication and therefore terminating the session, since no communication has been possible.

Additionally, the decision of which device should receive the request may be based on configurable preferences, for example, in case of "Saturday" redirect all the calls to personal user device and not to a work user device). Further, for example: if everything else does not lead to a routing decision, drop the call. The parameters may be configurable per application, or per subscriber.

The present invention focuses on the routing of the SIP messages or transactions; the invention is not concerned with the sessions.

In the present exemplary methods, the application itself can use the SIP REGISTER message to indicate the own capabilities. This can be done explicitly or implicitly (based on parameters like user agent). Only based on this information and the SIP MESSAGE to be relayed, the AS decides which endpoint will receive the message.

As a way of example, a method according to the invention comprises determining which SIP instance should receive the SIP request (RQ) based on a static parameter, the static parameter being time of day; this is, from 1pm to 2pm during weekdays, a user may prefer having a stop for lunch at work, so that every call or every request for a telecommunication service coming from business-related contacts may be rejected and every personal call may be redirected to the user instance associated to a personal user device. This would imply the use of type personal user identity associated with a personal user device.

For example, another static parameter would be the type of service requested, this is, if the user preferences include to receive a video call always on the same device, independently of the AS determination, the video call will be sent to the selected device statically.

## Claims

1.  A method of determining which user device (UD) of a plurality of user devices should receive a Session Initiation Protocol, SIP, request (RQ) for a communication service on a telecommunications system, the system comprising:

    - a plurality of user devices (UD) adapted to run a communication service;
    - an application server (AS) in communication with the plurality of user devices on which there is comprised a registry of the plurality of user devices (UD), the registry comprising associations between user devices and SIP instances, each user device being associated with a respective user identity; and,
    - a telecommunication network in communication with the plurality of user devices (UD) and with the application server (AS),

    wherein the method comprises, at the application server (AS):

    a) receiving a SIP request (RQ) (21, 31, 41, 51, 61) for establishing a communication service, the SIP request intended for a user identity from the telecommunication network;
    b) dynamically determining (22, 32, 42, 52, 64) which SIP instance should receive the SIP request (RQ) based on the user identity for which the SIP request is intended and parameters associated with the user device or SIP instance on the registry, the parameters including the capability to receive a voice over IP (VoIP) call; and
    c) routing (23, 33, 35, 53, 613, 616) the request (RQ) for a communication service to the determined user device (UD) or determined user devices (UDs), the routing including sending to SIP instances associated to user devices which are voice over IP capable if the request (RQ) is a voice over IP call, and sending to SIP instances for a user identity attached to a circuit switched network if the request is a voice over IP call and there are no user devices voice over IP capable available.

2.  A method according to claim 1, wherein step b) (22, 32, 42, 52, 64) further comprises determining which SIP instance should receive the SIP request (RQ) based on a static parameter associated to a user device (UD) or a group of user devices (UDs).

3.  A method according to claim 2, wherein the static parameter is configurable per application or per user identity.

4.  A method according to any preceding claim, wherein the static parameter includes one or more parameters selected from a group comprising: time of day, date, configured default routing and type of user identity associated with a user device.

5.  A method according to any preceding claim, wherein the parameters associated with the user device or SIP instance on the registry further include one or more selected from a group comprising:

    • capabilities of the user device (UD) associated to each SIP instance on the registry;
    • current user device communication bearer technology;
    • contextual information; and,
    • stored user preferences.

6.  A method according to claim 1, wherein the step of routing c) (23, 33, 35, 53, 613, 616) comprises sending the request (RQ):

- to the determined Session Initiation Protocol (SIP) instance, or
- if there are several Session Initiation Protocol (SIP) instances, then send the request (RQ) to the several determined Session Initiation Protocol (SIP) instances, or the user devices (UDs) associated therein, or
- to the user identity or user identities (Uls) attached to a circuit switched (CS) network, or
- to none of them, in case that no instance is capable for running the service for which the request (RQ) is intended.

7. A method according to any preceding claim, further comprising terminating (55, 621) establishment of the communication based on the parameters.

8. A method according to any preceding claim, further comprising sending a broadcast message to all registered user devices associated with a particular user identity and routing the SIP request to a device which responds to the broadcast message.

9. An application server comprised on a telecommunication network, the server being adapted to perform the steps of claims 1 to 8.

10. A computer readable medium comprising instruction which, when executed by a computer, cause the computer to carry out the steps of claim 1 to 8.


**Patentansprüche**

1. Ein Verfahren zur Bestimmung, welche Benutzervorrichtung (User Device, UD) aus einer Vielzahl von Benutzervorrichtungen eine Sitzungseinleitungsprotokollanfrage (Session Initiation Protocol, SIP; Request, RQ) für einen Kommunikationsdienst auf einem Telekommunikationssystem empfangen soll, wobei das System Folgendes umfasst:

- eine Vielzahl von Benutzervorrichtungen (UD), die dafür ausgelegt sind, einen Kommunikationsdienst auszuführen;
- einen Anwendungsserver (Application Server, AS) in Kommunikation mit der Vielzahl von Benutzervorrichtungen, der ein Register der Vielzahl von Benutzervorrichtungen (UD) umfasst, wobei das Register Zuordnungen zwischen Benutzervorrichtungen und SIP-Instanzen umfasst, wobei jeder Benutzervorrichtung eine jeweilige Benutzeridentität zugeordnet ist; und
- ein Telekommunikationsnetz in Kommunikation mit der Vielzahl von Benutzervorrichtungen (UD) und dem Anwendungsserver (AS),

wobei das Verfahren Folgendes umfasst, an dem Anwendungsserver (AS):

a) Empfangen einer SIP-Anfrage (RQ) (21, 31, 41, 51, 61) zur Einrichtung eines Kommunikationsdienstes, wobei die SIP-Anfrage für eine Benutzeridentität aus dem Telekommunikationsnetz vorgesehen ist;
b) dynamisches Bestimmen (22, 32, 42, 52, 64), welche SIP-Instanz die SIP-Anfrage (RQ) empfangen soll, basierend auf der Benutzeridentität, für welche die SIP-Anfrage vorgesehen ist, und Parametern, die der Benutzervorrichtung oder SIP-Instanz auf dem Register zugeordnet sind, wobei die Parameter die Fähigkeit zum Empfang eines Sprache-über-IP-Anrufs (Voice over IP, VoIP-Anruf) beinhalten; und
c) Weiterleiten (23, 33, 35, 53, 613, 616) der Anfrage (RQ) eines Kommunikationsdienstes an die bestimmte Benutzervorrichtung (UD) oder die bestimmten Benutzervorrichtungen (UDs), wobei die Weiterleitung das Senden an SIP-Instanzen beinhaltet, die Sprache-über-IP-fähigen Benutzervorrichtungen zugeordnet sind, wenn es sich bei der Anfrage (RQ) um einen Sprache-über-IP-Anruf handelt, und das Senden an SIP-Instanzen einer Benutzeridentität, die mit einem leitungsvermittelten Netz verbunden ist, wenn es sich bei der Anfrage um einen Sprache-über-IP-Anruf handelt und keine Sprache-über-IPfähigen Benutzervorrichtungen verfügbar sind.

2. Ein Verfahren nach Anspruch 1, wobei Schritt b) (22, 32, 42, 52, 64) weiter die Bestimmung umfasst, welche SIP-Instanz die SIP-Anfrage (RQ) empfangen soll, basierend auf einem statischen Parameter, der einer Benutzervorrichtung (UD) oder einer Gruppe von Benutzervorrichtungen (UDs) zugeordnet ist.

3. Ein Verfahren nach Anspruch 2, wobei der statische Parameter pro Anwendung oder pro Benutzeridentität konfigurierbar ist.

4. Ein Verfahren nach einem vorhergehenden Anspruch, wobei der statische Parameter einen oder mehrere Parameter beinhaltet, die aus einer Gruppe umfassend Folgendes ausgewählt werden: Uhrzeit, Datum, konfigurierte Standardweiterleitung und Typ der Benutzeridentität, die einer Benutzervorrichtung zugeordnet ist.

5. Ein Verfahren nach einem vorhergehenden Anspruch, wobei die Parameter, die der Benutzervorrichtung oder SIP-Instanz im Register zugeordnet sind, weiter einen oder mehrere beinhalten, die aus einer Gruppe umfassend Folgendes ausgewählt werden:

  • Fähigkeiten der Benutzervorrichtung (UD), die jeder SIP-Instanz im Register zugeordnet ist;
  • aktuelle Kommunikationsträgertechnologie der Benutzervorrichtung;
  • Kontextinformationen; und
  • gespeicherte Benutzereinstellungen.

6. Ein Verfahren nach Anspruch 1, wobei der Schritt der Weiterleitung c) (23, 33, 35, 53, 613, 616) das Senden der Anfrage (RQ) an folgende umfasst:

  - an die bestimmte Sitzungseinleitungsprotokollinstanz (Session Initiation Protocol, SIP-Instanz) oder,
  - wenn mehrere Sitzungseinleitungsprotokollinstanzen (Session Initiation Protocol, SIP-Instanzen) vorhanden sind, Senden der Anfrage (RQ) an die mehreren bestimmten Sitzungseinleitungsprotokollinstanzen (Session Initiation Protocol, SIP-Instanzen) oder die Benutzervorrichtungen (UDs), die diesen zugeordnet sind, oder
  - an die Benutzeridentität oder die Benutzeridentitäten (User Identities, UIs), die mit einem leitungsvermittelten (Circuit Switched, CS) Netz verbunden sind, oder
  - an keine davon, wenn keine Instanz zur Ausführung des Dienstes fähig ist, für den die Anfrage (RQ) vorgesehen ist.

7. Ein Verfahren nach einem vorhergehenden Anspruch, weiter umfassend die Beendigung (55, 621) der Einrichtung der Kommunikation basierend auf den Parametern.

8. Ein Verfahren nach einem vorhergehenden Anspruch, weiter umfassend das Senden einer Rundsendenachricht an alle registrierten Benutzervorrichtungen, die einer bestimmten Benutzeridentität zugeordnet sind, und das Weiterleiten der SIP-Anfrage an eine Vorrichtung, die auf die Rundsendenachricht antwortet.

9. Ein auf einem Telekommunikationsnetz beinhalteter Anwendungsserver, wobei der Server dafür ausgelegt ist, die Schritte der Ansprüche 1 bis 8 durchzuführen.

10. Ein computerlesbares Medium mit Anweisungen, die bei der Ausführung durch einen Computer veranlassen, dass der Computer die Schritte des Verfahrens nach Anspruch 1 bis 8 ausführt.

**Revendications**

1. Un procédé de détermination du dispositif d'utilisateur (UD) d'une pluralité de dispositifs d'utilisateur qui doit recevoir une demande (RQ) de protocole d'ouverture de session, SIP, relative à un service de communication sur un système de télécommunications, le système comprenant :

  - une pluralité de dispositifs d'utilisateur (UD) adaptés de façon à exécuter un service de communication,
  - un serveur d'applications (AS) en communication avec la pluralité de dispositifs d'utilisateur sur lesquels se trouve un registre de la pluralité de dispositifs d'utilisateur (UD), le registre comprenant des associations entre des dispositifs d'utilisateur et des instances SIP, chaque dispositif d'utilisateur étant associé à une identité d'utilisateur respective, et
  - un réseau de télécommunication en communication avec la pluralité de dispositifs d'utilisateur (UD) et avec le serveur d'applications (AS),

où le procédé comprend, au niveau du serveur d'applications (AS) :

  a) la réception d'une demande (RQ) SIP (21, 31, 41, 51, 61) destinée à l'établissement d'un service de communication, la demande SIP étant prévue pour une identité d'utilisateur à partir du réseau de télécommunication,
b) la détermination dynamique (22, 32, 42, 52, 64) de l'instance SIP qui doit recevoir la demande (RQ) SIP en fonction de l'identité d'utilisateur pour laquelle la demande SIP est prévue et de paramètres associés au dispositif d'utilisateur ou à l'instance SIP sur le registre, les paramètres comprenant la capacité de réception d'un appel voix sur IP (VoIP), et
c) l'acheminement (23, 33, 35, 53, 613, 616) de la demande (RQ) relative à un service de communication au dispositif d'utilisateur (UD) déterminé ou aux dispositifs d'utilisateur (UD) déterminés, l'acheminement comprenant l'envoi à des instances SIP associées à des dispositifs d'utilisateur qui sont compatibles voix sur IP si la demande (RQ) est un appel voix sur IP, et l'envoi à des instances SIP pour une identité d'utilisateur rattachée à un réseau à commutation de circuits si la demande est un appel voix sur IP et qu'il n'y a aucun dispositif d'utilisateur compatible voix sur IP disponible.

2. Un procédé selon la Revendication 1, où l'opération b) (22, 32, 42, 52, 64) comprend en outre la détermination de l'instance SIP qui doit recevoir la demande (RQ) SIP en fonction d'un paramètre statique associé à un dispositif d'utilisateur (UD) ou un groupe de dispositifs d'utilisateur (UD).

3. Un procédé selon la Revendication 2, où le paramètre statique est configurable par application ou par identité d'utilisateur.

4. Un procédé selon l'une quelconque des Revendications précédentes, où le paramètre statique comprend un ou plusieurs paramètres sélectionnés dans un groupe comprenant : heure du jour, date, acheminement configuré par défaut et type d'identité d'utilisateur associé à un dispositif d'utilisateur.

5. Un procédé selon l'une quelconque des Revendications précédentes, où les paramètres associés au dispositif d'utilisateur ou à l'instance SIP sur le registre comprennent en outre un ou plusieurs éléments sélectionnés dans un groupe comprenant :

   • capacités du dispositif d'utilisateur (UD) associé à chaque instance SIP sur le registre,
   • technologie de support de communication de dispositif d'utilisateur actuelle,
   • informations contextuelles, et
   • préférences d'utilisateur conservées en mémoire.

6. Un procédé selon la Revendication 1, où l'opération d'acheminement c) (23, 33, 35, 53, 613, 616) comprend l'envoi de la demande (RQ) :

   - à l'instance de protocole d'ouverture de session (SIP) déterminée, ou
   - s'il existe plusieurs instances de protocole d'ouverture de session (SIP), alors envoyer la demande (RQ) aux plusieurs instances de protocole d'ouverture de session (SIP) déterminées, ou aux dispositifs d'utilisateur (UD) associés, ou
   - à l'identité d'utilisateur ou aux identités d'utilisateur (UI) rattachées à un réseau à commutation de circuits (CS), ou
   - à aucune de celles-ci, dans le cas où aucune instance n'est capable d'exécuter le service pour lequel la demande (RQ) est prévue.

7. Un procédé selon l'une quelconque des Revendications précédentes, comprenant en outre la terminaison (55, 621) de l'établissement de la communication en fonction des paramètres.

8. Un procédé selon l'une quelconque des Revendications précédentes, comprenant en outre l'envoi d'un message de radiodiffusion à la totalité des dispositifs d'utilisateur enregistrés associés à une identité d'utilisateur particulière et l'acheminement de la demande SIP à un dispositif qui répond au message de radiodiffusion.

9. Un serveur d'applications installé sur un réseau de télécommunication, le serveur étant adapté de façon à exécuter les opérations selon les Revendications 1 à 8.

10. Un support lisible par ordinateur contenant des instructions qui, lorsqu'elles sont exécutées par un ordinateur, amènent l'ordinateur à exécuter les opérations selon les Revendications 1 à 8.

FIG. 1

EP 2 938 041 B1

FIG. 2

FIG. 3

FIG. 4

FIG. 5

**FIG. 6**

EP 2 938 041 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8504708 B2
- EP 2489210 A1
- EP 1886458 B1
- US 20130151665 A1
- EP 2425348 A1
- US 20090150562 A
- US 20080281971 A